# FASCICULE DE BREVET EUROPEEN

(11) **EP 1 943 807 B1**
(45) Date de publication et mention de la délivrance du brevet: **27.01.2016**
(21) Numéro de dépôt: 06819076.8
(22) Date de dépôt: 13.10.2006
(51) Int. Cl.: H04L 29/06

(54) **PROCEDE DE GENERATION ET DEMULTIPLEXAGE D'UN SIGNAL DE CONTRIBUTION OPTIMISE, ET SYSTEME DE DIFFUSION REGIONALISEE DE DONNEES**
VERFAHREN ZUM ERZEUGEN UND DEMULTIPLEXEN EINES OPTIMIERTEN SIGNALBEITRAGS UND REGIONALISIERTES DATENAUSSTRAHLUNGSSYSTEM
METHOD FOR GENERATING AND DEMULTIPLEXING AN OPTIMIZED CONTRIBUTING SIGNAL, AND REGIONALIZED DATA BROADCASTING SYSTEM

(30) Priorité: 14.10.2005 FR 0510510
(43) Date de publication de la demande: 16.07.2008
(73) Titulaire: Thomson Licensing, 92130 Issy-les-Moulineaux (FR)
(72) Inventeur: OGER, Benoît, F-35135 Chantepie (FR); LEBARS, Eric, F-35850 Geneve (FR); LHERMITTE, Richard, F-35700 Rennes (FR)
(74) Mandataire: Lucas, Laurent Jacques
(86) Numéro de dépôt international: PCT/EP2006/067400
(87) Numéro de publication internationale: WO 2007/042574

(56) Documents cités:
- US-A1- 2003 140 353
- US-A1- 2004 095 966
- US-A1- 2004 190 515
- "Digital Video Broadcasting (DVB); DVB-H Implementation Guidelines; ETSI TR 102 377" ETSI STANDARDS, EUROPEAN TELECOMMUNICATIONS STANDARDS INSTITUTE, SOPHIA-ANTIPO, FR, vol. BC, no. V111, février 2005 (2005-02), XP014027140 ISSN: 0000-0001

## Description

L'invention concerne un procédé de génération et démultiplexage de contributions. Plus particulièrement, l'invention permet d'optimiser la bande passante nécessaire pour diffuser, en rafales de données via notamment un lien satellite, des services à diffusion globale et des services à diffusion régionale. L'invention s'applique notamment à une diffusion multi-régionale de services en rafales de données. L'invention a encore pour objet un système de diffusion régionalisée de données.

La diffusion de services à destination de récepteurs mobiles, comme par exemple des téléphones portables ou des assistants personnels, comporte notamment une étape de génération du signal de contribution et une étape de réception et de ré-émission des services par des émetteurs terrestres régionaux. Le signal de contribution est par exemple acheminé vers les différentes régions via un lien de contribution satellite. Or, la bande passante disponible sur un satellite est particulièrement limitée et donc coûteuse.

La diffusion de services à destination de récepteurs mobiles peut avoir recours à des techniques de diffusion de données en rafales successives, comme le propose par exemple la norme DVB-H. Cette technique permet de réaliser au niveau des récepteurs des économies d'énergie substantielles. Les moyens actuels permettent de diffuser des services à destination de récepteurs mobiles en optimisant la bande passante utilisée sur le lien de contribution. Cependant, de tels systèmes ne gèrent pas de lien de contribution délivrant des services à diffusion globale et des services régionaux à plusieurs réseaux terrestres répartis sur plusieurs zones géographiques et dont les données sont diffusées en rafales. Pour diffuser des services globaux et régionaux en rafales sur plusieurs régions, il est nécessaire de diffuser pour chaque région les services globaux et des services régionaux spécifiques. Aussi l'émission, pour chaque région, de données à diffusion régionale et globale conduit à une redondance des informations à diffusion globale et à une utilisation des ressources satellites sous-optimale.

La diffusion de services globaux et régionaux en rafales de données sur plusieurs régions se heurte à la complexité de la reconstitution du flux d'origine après l'étape de réception du signal de contribution.

En outre, la diffusion de services en rafales se fait habituellement grâce à une infrastructure réseaux à fréquence unique (ou selon l'expression anglo-saxonne Single Frequency Network). Les émetteurs terrestres diffusant les services régionaux doivent être synchronisés. Pour cela les récepteurs reçoivent des informantions de synchronisation provenant du lien de contribution sous forme de trames de synchronisation ou selon l'expression anglo-saxonne Mega-frame Initialization Packet formant l'acronyme MIP. La diffusion de services globaux et régionaux en rafales sur plusieurs régions doit donc restituer les trames MIP en réception sans altérer la précision de celles-ci. Chaque trame MIP, insérée régulièrement dans le flux, délivre une référence temporelle entre le flux et une horloge de référence. Ainsi on peut éliminer les écarts et la gigue entre les temps de transfert depuis le satellite jusqu'aux différentes régions. Des équipements adaptés à l'insertion de trames MIP, peuvent insérer correctement les trames MIP dans un flux dont le débit est connu et constant entre le moment où le flux est envoyé et le moment où le flux est reçu. Cependant il n'est pas possible de les utiliser dans un contexte de contribution. En effet le débit du signal de contribution peut être différent du débit du signal diffusé dans une région géographique donnée, certains services pouvant ne pas concerner certain région. Le débit étant différent entre le signal émis sur le lien de contribution et le signal reçu par les émetteurs, les valeurs comprises dans lés trames MIP insérées par un équipement adapté à l'insertion de trames MIP sont incorrectes.

L'invention a notamment pour but de pallier les inconvénients précités. A cet effet, l'invention a pour objet un procédé de génération d'un signal de contribution optimisé comportant des multiplexes.

Chaque multiplexe comporte des services à diffusion globale à destination d'une zone de couverture et une combinaison propre de servies régionaux à destination d'au moins une région géographique de ladite zone de couverture. Chaque multiplexe comporte des paquets de bourrage et des paquets transportant des tables de signalisations. Le signal de contribution optimisé est généré en :
- conservant uniquement les services à diffusion globale différents les uns des autres ;
- marquant les paquets de bourrage et les paquets transportant les tables de signalisations en fonction de leur multiplexe d'appartenance ;
- construisant des rafales de données à partir des flux de données correspondant aux services à diffusion globale, aux services régionaux, et aux paquets de bourrage marqués et aux paquets marqués transportant les tables de signalisation,
- insérant, avant la construction du signal de contribution optimisé, des informations de synchronisation sous forme de trames de synchronisation dans le signal de contribution optimisé, ledit signal de contribution optimisé étant reçu par au moins un récepteur présent dans une desdites région géographique, lesdits services régionaux étant extraits dudit signal de contribution optimisé et transmis à une pluralité de moyens de transmission couplés audit récepteur, lesdites informations de synchronisation ayant pour fonction d'accomplir la synchronisation entre lesdits moyens de transmission.

Dans un mode de réalisation, les paquets de bourrage et les paquets transportant les tables de signalisations sont marqués en opérant une translation de l'identifiant desdits paquets de bourrage et des paquets transportant les tables de signalisations.

Les rafales de données du signal de contribution optimisé peuvent être construites dans un premier temps pour tous les services à diffusion globale puis dans un second temps pour tous les services régionaux. Le signal de contribution optimisé peut comporter des rafales de données synchrones dont la période et le débit sont identiques.

L'invention a aussi pour objet un procédé de démultiplexage. Pour une région géographique donnée, à partir d'un signal de contribution optimisé comportant des données relatives à au moins un multiplexe, chaque multiplexe comprenant des services à diffusion globale et régionales, des paquets de bourrage et des paquets transportant des tables de signalisation marqués en fonction de leur multiplexe d'appartenance, un signal est construit en :
- ne conservant que les services destinés à ladite région géographique;
- construisant des rafales de données à partir des flux de données compris dans le signal de contribution optimisé correspondant :
   o aux services à diffusion globale ;
   o aux services régionaux destinés à ladite région géographique;
   o aux paquets de bourrage marqués et aux paquets marqués transportant les tables de signalisation correspondant aux services régionaux destinés à ladite région géographique.

Dans un mode de réalisation, au cours de l'étape de construction des rafales de données, l'identifiant des paquets de bourrage marqués et les paquets marqués transportant les tables de signalisations est translaté de manière à reconstituer lés flux de données correspondant aux services destinés à la région géographique.

Le procédé peut aussi comporter une étape de lissage du débit du signal construit à l'étape de construction des rafales de données.

L'invention a encore pour objet un système de diffusion de services régionaux et de services à diffusion globale. Le système est apte à générer un signal de contribution optimisé comportant des multiplexes. Chaque multiplexe comporte les services à diffusion globale et une combinaison propre de services régionaux et chaque multiplexe comporte des paquets de bourrage et des paquets transportant des tables de signalisations. Le système est apte à diffuser certains services régionaux et à diffusion globale en rafales de données. Le signal de contribution est généré en :
- conservant uniquement les services à diffusion globale différents les uns des autres ;
- marquant les paquets de bourrage et les paquets transportant les tables de signalisations en fonction de leur multiplexe d'appartenance ;
- construisant des rafales de données à partir des flux de données correspondant aux services à diffusion globale, aux services régionaux, et aux paquets de bourrage marqués et aux paquets marqués transportant les tables de signalisation,
- insérant des informations de synchronisation dans le signal de contribution optimisé,
ledit système étant apte à mettre en oeuvre un procédé de génération de signal conforme au procédé de génération de signal selon l'invention.

Dans un mode de réalisation, ledit système est prévu pour diffuser les multiplexes sur une zone de couverture comportant des régions géographiques. Chaque région géographique reçoit au moins un multiplexe. Le système comprend des récepteurs répartis dans différentes régions géographiques et aptes à recevoir ledit signal optimisé transmis dans la zone de couverture. Chaque récepteur est apte à générer à partir du signal de contribution optimisé un signal à émettre destiné à la région géographique dans laquelle ledit récepteur est situé. Le signal à émettre est transmis par des moyens de transmission sur l'ensemble de la région géographique dans laquelle les moyens de transmission se situent. Les moyens de transmission forment un réseau à fréquence unique et sont synchronisés. Au moins une partie desdits récepteurs sont destinés à mettre en oeuvre un procédé dé démultiplexage de signal conforme au procédé de démultiplexage de signal selon l'invention.

L'invention a encore pour objet un récepteur comportant une unité de traitement, une entrée et une sortie. L'entrée est prévue pour recevoir un signal de contribution optimisé comportant des données relatives à au moins un multiplexe. Chaque multiplexe comprend des services à diffusion globale et régionales, des paquets de bourrage et des paquets transportant des tables de signalisation marqués en fonction de leur multiplexe d'appartenance. L'unité de traitement est destiné à construire un signal envoyé sur la sortie en : - ne conservant que les services destinés à ladite région géographique; - construisant des rafales de données à partir des flux de données compris dans le signal de contribution optimisé correspondant : o aux services à diffusion globale ; o aux services régionaux destinés à ladite région géographique; o aux paquets de bourrage marqués et aux paquets marqués transportant les tables de signalisation correspondant aux services régionaux destinés à ladite région géographique.

Ledit récepteur est préférentiellement destiné à mettre en oeuvre un procédé de démultiplexage de signal conforme au procédé de démultiplexage de signal selon l'invention.

D'autres caractéristiques et avantages de l'invention apparaîtront à l'aide de la description qui suit faite en regard des dessins annexés qui représentent
- la figure 1, une architecture du système de diffusion régionalisée de données selon l'invention ;
- la figure 2a, les étapes mises en oeuvre par un procédé selon l'invention de génération d'un signal de contribution optimisé ;
- la figure 2b, les différents flux de données avant et après la mise en oeuvre du procédé selon l'invention multiplexage des contributions ;
- la figure 3a, les étapes mises en oeuvre par un procédé selon l'invention de démultiplexage des contributions ;
- la figure 3b, le signal obtenu en sortie de l'étape de génération du multiplexe du procédé selon l'invention de démultiplexage des contributions ;
- la figure 3c, le signal obtenu en sortie de l'étape de lissage du débit du procédé selon l'invention de démultiplexage des contributions ;
- la figure 4, par un synoptique, un mode de réalisation du récepteur selon l'invention.

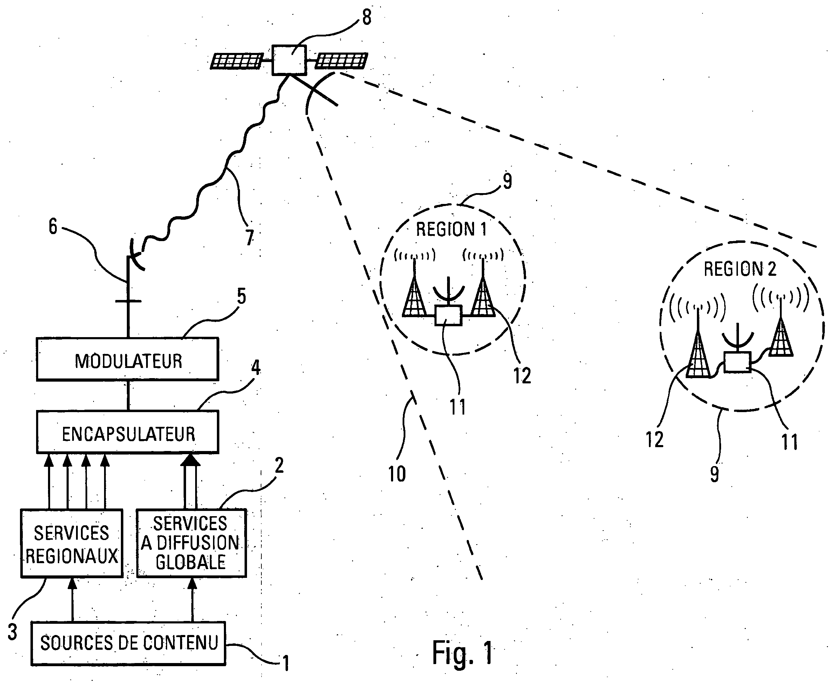

La figure 1 représente une architecture du système de diffusion régionalisée de données selon l'invention. Le système de diffusion régionalisée de données selon l'invention comporte une partie dont une des fonctions est de générer un signal de contribution. Des sources de contenus 1 génèrent des flux de données. Les sources de contenus 1 peuvent par exemple être des serveurs de fichiers, des régies, des lecteurs ou tout autre équipement délivrant un contenu. Les flux de données générées peuvent être par exemple des flux de données IP. Les différents flux de données comportent différents services ou programmes. Parmi les services compris dans les,flux de données, on distingue des services régionaux 3 devant être diffusés seulement dans certaines régions géographiques 9 et des services à diffusion globale 2, comme par exemple des services nationaux. Un encapsulateur 4 reçoit les flux de données correspondant aux services régionaux 3 et aux services à diffusion globale 2. L'encapsulateur 4 reçoit les flux de données, par exemple les flux de données IP, et construit les signaux destinés à chacune des différentes régions géographiques 9. Le signal construit par l'encapsulateur 4 pour une région géographique 9 donnée est un signal multiplexé, appelé aussi multiplexe, comprenant l'ensemble des flux de données correspondant aux services régionaux 3 propres à cette région géographique 9 et aux services à diffusion globale 2.

L'encapsulateur 4 peut notamment prendre en charge la création des rafales de données successives pour l'ensemble des services régionaux 3 et à diffusion globale 2. Un flux de données émis en rafale comporte une alternance de phases d'émission d'un train de données suivies de phase de silence d'une durée connue à priori. L'envoi discontinu de données autorise les équipements recevant un flux de données émis en rafale à se mettre en veille lors des instants de silence, et à reprendre la réception un peu avant le début de réception du prochain train de données, mécanisme rendu possible par la connaissance de l'heure d'émission du prochain paquet. La norme DVB-H décrit un tel mode de fonctionnement, avec pour objectif d'économiser les sources d'énergie des récepteurs.

L'encapsulateur 4 peut se conformer aux exigences de la norme DVB-H. Les signaux destinés à chacune des différentes régions géographiques 9 comportent alors des services à diffusion en rafales de données. Il est en outre possible d'obtenir en sortie de l'encapsulateur 4 des signaux muitiplexés comportant à la fois des services à diffusion en rafales successives et des services à diffusion multiplexe. L'encapsulateur 4 peut encore avoir pour fonction de réorganiser avant la diffusion les différents signaux multiplexés de manière à optimiser la bande passante nécessaire.

Dans un mode de réalisation, l'encapsulateur 4 peut encore insérer dans les différents signaux des trames comportant des informations de synchronisation à destination des équipements récepteurs. Par exemple, l'encapsulateur 4 peut insérer des trames MIP. Les trames MIP comportent les informations nécessaires pour accomplir la synchronisation entre les moyens de transmission 12. Des équipements, appelés MIP-Inserter, savent insérer correctement des trames MIP dans un flux. Cependant il n'est pas possible de les utiliser dans un contexte de contribution. C'est pourquoi la génération des trames MIP peut être implémentée au niveau de la construction des flux de données destinés aux différentes régions géographiques 9, avant la construction du signal de contribution. Cette implémentation est possible car l'encapsulateur 4 peut lui-même se synchroniser sur une horloge externe de type GPS. Comme le système de diffusion régionalisée de données selon l'invention assure l'intégrité des flux de données reçus dans chaque région géographique 9, les trames MIP seront toujours valides.

Les signaux multiplexés issues de l'encapsulateur 4 sont ensuite transmis à un modulateur 5 chargé d'adapter les signaux aux contraintes des canaux de transmission. Il peut par exemple moduler les signaux reçus avant de les transmettre à une antenne 6 pour diffusion vers un système satellitaire 8. Le système satellitaire 8 comporte un ou plusieurs satellites. Le signal transmis au système satellitaire 8 via l'antenne 6 est appelé signal de contribution 7. La bande passante disponible pour le signal de contribution 7 est particulièrement coûteuse et limitée. L'invention a notamment pour objet de réduire le besoin en bande passante nécessaire au signal de contribution 7.

Le système satellitaire 8 diffuse sur une zone de couverture 10 le signal de contribution 7. La zone de courverture 10 comporte notamment plusieurs régions géographiques 9. Dans chaque région géographique 9 est présent au moins un récepteur 11 couplé à des moyens de transmission 12. Chaque récepteur 11 reçoit le signal en provenance du système satellitaire 8 et au besoin le démodule. Ce signal est identique dans la zone de couverture 10 pour tous les récepteurs 11, indépendamment de la région géographique 9 du site de réception. Le récepteur 11 extrait les services destinés à la région géographique 9 dans laquelle il est situé. Ainsi, les services extraits sont donc uniquement les services à diffusion globale 2 et les services régionaux 3 destinés à la région géographique 9 du récepteur 11. Les services extraits sont indifféremment des services à diffusion en rafales, des services à diffusion multiplexé ou une combinaison quelconque des deux types de services. Enfin, les flux de données correspondant aux services extraits peuvent être conformes à la norme DVB-H. Le récepteur 11 transmet les services extraits aux moyens de transmission 12. Les moyens de transmission 12 ont pour fonction de diffuser les services extraits sur l'ensemble de leur région géographique 9. Les moyens de transmission 12 peuvent notamment être des émetteurs hyperfréquences réparties sur l'ensemble de la région géographique 9. Les moyens de transmission 12 peuvent former un réseau à fréquence unique (ou selon l'expression anglosaxonne Single Frequency Network). Les moyens de transmission 12 de la zone de couverture 10 doivent alors être synchronisés afin d'exclure les interférences mutuelles. Pour ce faire, les moyens de transmission 12 se synchronisent grâce aux trames MIP générées par exemple par l'encapsulateur 4. Les trames MIP comportent les informations nécessaires pour accomplir la synchronisation entre les moyens de transmission 12.

La figure 1 illustre une architecture du système de diffusion régionalisée de données selon l'invention mettant en oeuvre un signal de contribution 7 diffusée par un système satellitaire 8. Cependant, tout autre moyen de diffusion dont la bande passante doit être optimisée peut être employé pour remplir cette fonction.

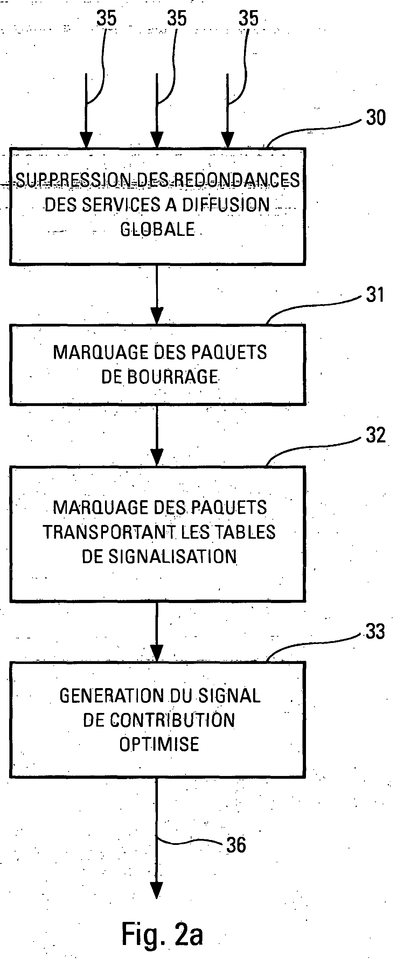

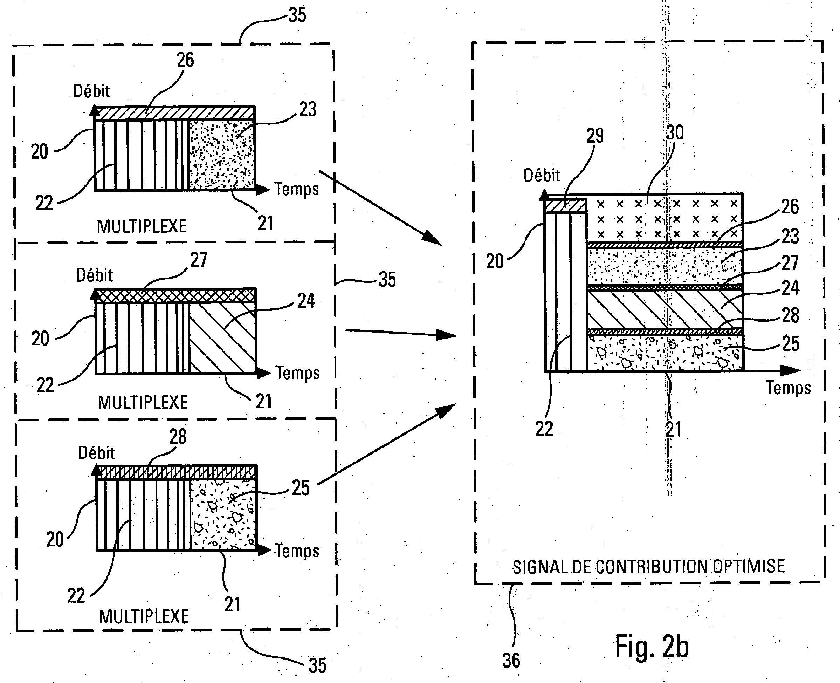

La figure 2a montre les étapes mises en oeuvre par un procédé selon l'invention de génération d'un signal de contribution optimisé. La figure 2b montre les différents flux de données avant et après la mise en oeuvre du procédé selon l'invention de multiplexage des contributions. Les éléments identiques aux éléments déjà présentés sur les autres figures portent les mêmes références. Le procédé selon l'invention peut notamment être mis en oeuvre dans la partie d'un système de diffusion régionalisée de données selon l'invention dont une des fonctions est de générer un signal de contribution optimisé.

Le procédé selon l'invention de génération d'un signal de contribution optimisé reçoit en entrée au moins un service à diffusion globale 2 et des services régionaux 3. On appelle par la suite multiplexe 35 le signal comportant l'ensemble des services à diffusion globale 2 et des services régionaux 3 destinés à une région géographique 9 donnée. Le procédé selon l'invention reçoit pour chaque région géographique 9 un multiplexe 35. Le procédé selon l'invention délivre en sortie un signal de contribution optimisé 36. La figure 2b illustre le cas où le procédé selon l'invention reçoit en entrée trois multiplexes 35 et délivre en sortie un signal de contribution optimisé 35. Sur la figure 2b, les diagrammes de flux de données comportent un axe des abscisses 21 représentant le temps et un axe des ordonnées 20 représentant le débit des flux de données. Le procédé selon l'invention de multiplexage des contributions a notamment pour objet de réduire la bande passante nécessaire pour diffuser les services régionaux des différentes régions 9 et de délivrer un signal de contribution optimisé 36 à partir duquel chaque récepteur 11 peut retrouver les services régionaux 3 qui lui sont destinés. Or les contraintes liées notamment à la diffusion de services répondant à la norme DVB-H imposent de respecter une synchronisation entre l'émetteur et le récepteur du service ne tolérant pas la moindre insertion ou suppression de bit d'information dans le signal.

Dans une étape 30 du procédé selon l'invention, les services à diffusion globale 2 redondants sont supprimés. Pour chaque service à diffusion globale 2, on ne conserve qu'un seul flux de données. En effet, par définition les services à diffusion globale 2 sont présents dans chaque multiplexe 35. L'étape 30 de suppression des redondances des services à diffusion globale 2 permet de ne conserver dans le signal de contribution optimisé 36 que les services à diffusion globale 2 différents les uns des autres. Aussi, sur la figure 2b, il existe trois multiplexes 35 :
- un premier multiplexe 35 comportant un service à diffusion globale 22 et un service régional 23 diffusé en rafale,
- un second multiplexe 35 comportant le service à diffusion global 22 et un service régional 24 diffusé en rafale ;
- un troisième multiplexe 35 comportant le service à diffusion globale 22 et un service régional 25 diffusé en rafale.

A l'issue du procédé selon l'invention, et notamment à la sortie de l'étape 30, le signal de contribution optimisé 36 ne comporte qu'un flux de données correspondant au service à diffusion globale 22.
Afin de conserver un débit constant, les flux de données supportant les services comportent des paquets de bourrage. Ces paquets de bourrage permettent de transmettre un flux avec un débit connu, permettant aux récepteurs 11 de se repérer temporellement. Ces paquets de bourrage sont propres à un multiplexe 35 donné. De plus, les flux de données supportant les services, comportent des tables de signalisation propre à chaque multiplexe 35. Aussi, comme illustré sur la figure 2b :
- le premier multiplexe 35 comporte des paquets de bourrage et des paquets transportant les tables de signalisation 26 ;
- le second multiplexe 35 comporte des paquets de bourrage et des paquets transportant les tables de signalisation 27 ;
- le troisième multiplexe 35 comporte des paquets de bourrage et des paquets transportant les tables de signalisation 28.
Le flux de données supportant les services à diffusion globale 22 comporte aussi des paquets transportant les tables de signalisation 29.

La figure 2b montre un cas où le débit des paquets de bourrage est constant. Cependant, le débit peut être variable au cours du temps et différent d'un multiplexe 35 à l'autre.

Dans une étape 31 de marquage des paquets de bourrage, les paquets de bourrage 26,27,28 sont marqués en fonction de leur multiplexe 35 d'appartenance. Cette opération a pour fonction d'associer un paquet de bourrage 26, 27, 28 à un multiplexe 35 donné. Cette opération peut par exemple être mise en oeuvre en opérant une translation de l'identifiant Pid des paquets de bourrage 26, 27, 28.

Dans une étape 32 de marquage des paquets transportant les tables de signalisations, les paquets transportant les tables de signalisation 26,27,28 sont marqués en fonction de leur multiplexe 35 d'appartenance. Cette opération a pour fonction d'associer des paquets transportant les tables de signalisation 26,27,28. à un multiplexe 35 donné. Cette opération peut par exempte être mise en oeuvre en opérant une translation de l'identifiant Pid des paquets transportant les tables de signalisation 26,27,28.

Dans une étape 33 de génération du signal de contribution optimisé, un flux de données est construit notamment à partir des flux de données générés aux étapes 30, 31 et 32. Le flux de données comporte notamment un flux de données correspondant au service à diffusion globale 22, aux rafales de données correspondant aux services régionaux 23, 24 et 25, aux paquets de bourrage marqués et les paquets marqués transportant les tables de signalisation 26,27,28. La bande passante restante peut être remplie par des paquets de bourrage 30, notamment si les services régionaux 23, 24, 25 n'ont pas des débits identiques. La génération 33 du signal de contribution optimisé 36 regroupe les services selon qu'ils sont régionaux 3 ou à diffusion globale 2. Ainsi, pour chaque rafale, le service à diffusion globale 22 est transmis avant les services régionaux 23, 24 et 25. De plus, le signal de contribution optimisé 36 comporte des rafales de données synchrones dont la période et le débit sont identiques. Aussi, la période et le débit des rafales de données correspondant aux services régionaux 23, 24 et 25 sont identiques. De plus, les rafales de données correspondant aux services régionaux 23, 24 et 25 sont synchrones : elles sont transmises au même instant. En outre, le débit de génération de chaque multiplexe 35 doit correspondre au débit d'émission par les moyens de transmission 12 sur le réseau terrestre.

Dans un mode de réalisation, au cours de l'étape 33 de génération du signal de contribution optimisé, des informations de synchronisation sont introduites dans le signal de contribution optimisé 36. Ces informations de synchronisation peuvent par exemple prendre la forme de trames MIP. Les trames MIP comportent les informations nécessaires pour accomplir la synchronisation entraxes moyens de transmission 12 notamment.

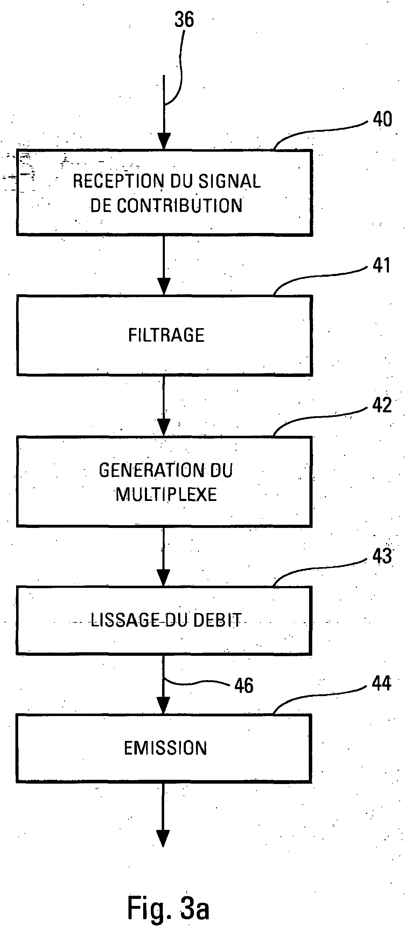

La figure 3a montre les étapes mises en oeuvre par un procédé selon l'invention de démultiplexage des contributions. Les éléments identiques aux éléments déjà présentés sur les autres figures portent les mêmes références.

Un des rôles des récepteurs 11 est d'extraire à partir du signal de contribution optimisé 36 le multiplexe 35 original destiné à leur région géographique 9. Le procédé selon l'invention de démultiplexage des contributions peut notamment être mis en oeuvre dans chaque récepteur 11 recevant un signal de contribution optimisé 36 généré par un procédé selon l'invention de multiplexage des contributions.

Dans une première étape 40, le procédé selon l'invention de démultiplexage des contributions reçoit le signal de contribution optimisé 36. Le signal de contribution optimisé 36 comporte l'ensemble des services régionaux 23, 24, 25 et à diffusion globale 22.

Dans une étape 41, le signal de contribution optimisé 36 est filtré afin de ne conserver que les services destinés à une région géographique 9 donnée. Les paquets qui ne sont pas destinées à la région géographique 9, à laquelle appartient le récepteur 11, sont supprimés. Les paquets de bourrage non marqués sont aussi supprimés.

Dans une étape 42, le multiplexe 35 est régénéré. Pour cela, il est nécessaire non seulement de reconstituer les flux de données correspondant aux services destinés à une région géographique 9 donnée, mais aussi de reconstruire les paquets de bourrage et les paquets transportant les tables de signalisation propre à un multiplexe donné 35. Pour cela, on peut par exemple, translater, de manière opposée à l'étape 31 et 32 du procédé Selon l'invention de multiplexage des contributions, l'identifiant Pid des paquets de bourrage et des paquets transportant les tables de signalisation 26,27,28 en fonction de leur multiplexe 35 d'appartenance.

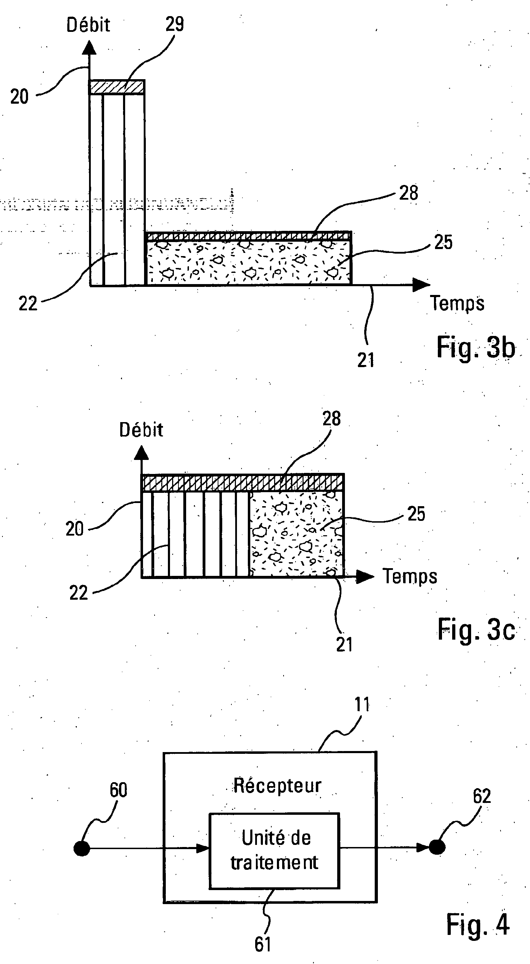

La figure 3b illustre le signal obtenu en sortie de l'étape 42 de génération du multiplexe du procédé selon l'invention de démultiplexage des contributions. Les éléments identiques aux éléments déjà présentés sur les autres figures portent les mêmes références. Sur la figure 3b, le diagramme de flux de données comporte un axe des abscisses 21 représentant le temps et un axe des ordonnées 20 représentant le débit des flux de données. Le signal comporte:
- le service à diffusion globale 22 et les paquets correspondant transportant les tables de signalisation 29 ;
- le service régional 25 ainsi les paquets de bourrage et des paquets transportant les tables de signalisation 28.
Le débit du service à diffusion globale 22 est généralement plus important que le débit du service régional 25.

Or le débit auquel sont reçus les services à diffusion globale 2 est généralement supérieur au débit des moyens de transmission 12. Dans une étape 42, le débit du signal à émettre 46 est lissé.

La figure 3c illustre le signal 46 obtenu en sortie de l'étape 43 de lissage du débit du procédé selon l'invention de démultiplexage des contributions. Les éléments identiques aux éléments déjà présentés sur les autres figures portent les mêmes références. Sur la figure 3b, le diagramme de flux de données comporte un axe des abscisses 21 représentant le temps et un axe des ordonnées 20 représentant le débit des flux de données. Le signal comporte :
- le service à diffusion globale 22 et les paquets correspondant transportant les tables de signalisation 29 ;
- le service régional 25 ainsi les paquets de bourrage et des paquets transportant les tables de signalisation 28.
A la différence du signal en sortie de l'étape 42 de génération du multiplexe du procédé selon l'invention de démultiplexage des contributions, le débit est sensiblement constant au cours du temps, quel que soit le type de service (régional 3 ou à diffusion globale 2) à transmettre.

L'opération 43 de lissage du débit peut être mise en oeuvre par l'intermédiaire de tampons de données permettant d'absorber et de lisser le débit fluctuant de paquets.

Dans une étape 44, le signal 46 obtenu en sortie de l'étape 43 de lissage du débit du procédé selon l'invention de démultiplexage des contributions est ensuite ré-émis localement, c'est-à-dire dans la zone géographique 9 des moyens de transmission 12.

Dans un mode de réalisation, les étapes 41, 42, 43 du procédé selon l'invention de réception et de régénération d'un multiplexe 35 sont réalisées par un modulateur DVB-H, utilisé par exemple par les moyens de transmission 12. On constate donc que le récepteur 11 n'a, en dehors de la réception satellite pure, que des tâches très simples à effectuer et peu de besoin en mémoire. L'intégration de ces fonctions dans un modulateur DVB-H permet donc de simplifier le récepteur 11.

La figure 4 illustre par un synoptique un mode de réalisation du récepteur 11 selon l'invention. Les éléments-identiques aux éléments déjà présentés sur les autres figures portent les mêmes références. Le récepteur 11 comporte notamment une unité de traitement 61. L'unité de traitement 61 peut être une carte électronique comportant un ou plusieurs microprocesseurs, un composant à logique programmable, ou tout autre dispositif adapté notamment aux calculs numériques.

Le récepteur 11 reçoit sur une entrée 60 un signal de contribution optimisé 36 comportant des données relatives à au moins un multiplexe 35. Chaque multiplexe comprend des services à diffusion globale 22 et régionales 23, 24 et 25, des paquets de bourrage et des paquets transportant des tables de signalisation 26,27,28 marqués en fonction de leur multiplexe d'appartenance. L'unité de traitement 61 du récepteur 11 construit un signal envoyé sur une sortie 62 en mettant en oeuvre les étapes du procédé selon l'invention dé démultiplexage des contributions (illustré notamment par la figure 3a). La sortie 62 peut être notamment connecté aux moyens de transmission 12.

## Revendications

1. Procédé de génération d'un signal de contribution optimisé (36) comportant des multiplexes (35), chaque multiplexe (35) comportant des services à diffusion globale (22) à destination d'une zone de couverture (10) et une combinaison propre de services régionaux (23, 24, 25) à destination d'au moins une région géographique (9) de ladite zone de couverture, chaque multiplexe (35) comportant des paquets de bourrage et des paquets transportant des tables de signalisations (26, 27, 28) **caractérisé en ce que** le signal de contribution optimisé (36) est généré par un encapsulateur (4) en :
- conservant (30) uniquement les services à diffusion globale (22) différents les uns des autres ;
- marquant (31 ,32) les paquets de bourrage et les paquets transportant les tables de signalisations (26, 27, 28) en fonction de leur multiplexe (35) d'appartenance ;
- construisant (33) des rafales de données à partir des flux de données correspondant aux services à diffusion globale (22), aux services régionaux (23, 24, 25), et aux paquets de bourrage marqués et aux paquets marqués transportant les tables de signalisation (26, 27, 28),
- insérant, avant la construction du signal de contribution optimisé (36), des informations de synchronisation sous forme de trames de synchronisation dans le signal de contribution optimisé (36), ledit signal (36) de contribution optimisé étant reçu par au moins un récepteur (11) présent dans une desdites régions géographiques (9), lesdits services régionaux (23,24,25) étant extraits dudit signal de contribution optimisé (36) et transmis à une pluralité de moyens de transmission (12) couplés audit récepteur (11), lesdites informations de synchronisation ayant pour fonction d'accomplir la synchronisation entre lesdits moyens de transmission (12).

2. Procédé selon la revendication 1 **caractérisé en ce que** les paquets de bourrage et les paquets transportant les tables de signalisations (26, 27, 28) sont marqués (31, 32) en opérant une translation de l'identifiant (Pid) desdits paquets de bourrage et des paquets transportant les tables de signalisations (26, 27, 28).

3. Procédé selon l'une quelconque des revendications précédentes **caractérisé en ce que** les rafales de données du signal de contribution optimisé (36) sont construites (33) dans un premier temps pour tous les services à diffusion globale (22) puis dans un second temps pour tous les services régionaux (23, 24, 25).

4. Procédé selon l'une quelconque des revendications précédentes **caractérisé en ce que** le signal de contribution optimisé (36) comporte des rafales de données synchrones dont la période et le débit sont identiques.

5. Procédé de démultiplexage **caractérisé en ce que**, pour une région géographique (9) donnée, a partir d'un signal de contribution optimisé (36) obtenu en exécutant les étapes du procédé selon l'une quelconque des revendications 1 à 5 et comportant des données relatives à au moins un multiplexe (35), chaque multiplexe (35) comprenant des services à diffusion globale (22) et régionales (23, 24 et 25), des paquets de bourrage et des paquets transportant des tables de signalisation (26,27,28) marqués en fonction de leur multiplexe d'appartenance, un signal est construit en :
- conservant (41) uniquement les services destinés à ladite région géographique (9);
- construisant (42) des rafales de données à partir des flux de données compris dans le signal de contribution optimisé (36) correspondant :
o aux services à diffusion globale (22) ;
o aux services régionaux (23, 24, 25) destinés à ladite région géographique (9);
o aux paquets de bourrage marqués et aux paquets marqués transportant les tables de signalisation (26, 27, 28) correspondant aux services régionaux (23, 24, 25) destinés à ladite région géographique (9).

6. Procédé selon la revendication 5 **caractérisé en ce qu'**au cours de l'étape (42) de construction des rafales de données, l'identifiant (Pid) des paquets de bourrage marqués et des paquets marqués transportant les tables de signalisations (26, 27, 28) est translaté de manière à reconstituer les flux de données correspondant aux services destinés à la région géographique (9).

7. Procédé selon l'une des revendications 5 ou 6 **caractérisé en ce qu'**il comporte une étape (43) de lissage du débit du signal (36) construit à l'étape de construction (42) des rafales de données.

8. Système de diffusion de services régionaux (23, 24, 25) et de services a diffusion globale (22), ledit système comprenant un encapsulateur destiné à générer un signal de contribution optimisé (36) comportant des multiplexes (35), chaque multiplexe (35) comportant les services à diffusion globale (22) et une combinaison propre de services régionaux (23, 24, 25) et chaque multiplexe (35) comportant des paquets de bourrage et des paquets transportant des tables de signalisations (26, 27, 28), **caractérisé en ce que** ledit système est apte à diffuser certains services régionaux (23, 24, 25.) et à diffusion globale (22) en rafales de données, le signal de contribution étant généré en exécutant les étapes du procédé selon l'une quelconque des revendications 1 à 4.

9. Système de diffusion selon la revendication 8, **caractérisé en ce que** ledit système étant prévu pour diffuser les multiplexes (35) sur une zone de couverture (10) comportant des régions géographiques (9) et chaque région géographique (9) recevant au moins un multiplexe (35), ledit système comprend des récepteurs (11) répartis dans différentes régions géographiques (9) et destinés à recevoir ledit signal optimisé transmis dans la zone de couverture (10), chaque récepteur (11) étant destiné à générer à partir du signal de contribution optimisé (36) un signal à émettre destiné à la région géographique (9) dans laquelle ledit récepteur (11) est situé, le signal à émettre étant transmis par des moyens de transmission (12) sur l'ensemble de la région géographique (9) dans laquelle les moyens de transmission (12) se situent, les moyens de transmission (12) formant un réseau à fréquence unique et étant synchronisés, au moins une partie desdits récepteurs (11) étant destinés à mettre en oeuvre le procédé de démultiplexage conforme à l'une quelconque des revendications 5 à 7.

10. Récepteur (11) comportant une unité de traitement (61), une entrée (60) et une sortie (62), **caractérisé en ce que** l'entrée (60) étant prévue pour recevoir un signal de contribution optimisé (36) obtenu en exécutant les étapes du procédé selon l'une quelconque des revendications 1 à 4 et comportant des données relatives à au moins un multiplexe (35), chaque multiplexe (35) comprenant des services à diffusion globale (22) et régionales (23, 24 et 25), des paquets de bourrage et des paquets transportant des tables de signalisation (26, 27, 28) marqués en fonction de leur multiplexe (35) d'appartenance, l'unité de traitement (61) est destinée à construire un signal envoyé sur la sortie (62)obtenu en mettant en oeuvre le procédé de démultiplexage conforme à l'une quelconque des revendications 5 à 7.

## Patentansprüche

1. Verfahren zur Erzeugung eines optimierten Signalbeitrags (36) mit Multiplexen (35), wobei jedes Multiplex (35) globale Übertragungsdienste (22) für ein Sendegebiet (10) und eine eigene Kombination an Regionaldiensten (23, 24, 25) für mindestens eine geographische Region (9) des besagten Sendegebietes umfasst, wobei jedes Multiplex Füllpakete und Transportpakete der Signaltabellen (26, 27, 28) umfasst und **dadurch gekennzeichnet ist, dass** der optimierte Signalbeitrag (36) von einem Inkapsulator erzeugt wird (4), indem:
- nur die sich voneinander unterscheidenden globalen (22) Übertragungsdienste (30) beibehalten werden;
- die Füllpakete und die die Signaltabellen (27, 27, 28) transportierenden Pakete entsprechend ihrem Zugehörigkeits-Multiplex (35) gekennzeichnet (31, 32) werden;
- Datenbursts aus dem Datenstrom gebildet (33) werden, der den globalen Übertragungsdiensten (22), den Regionaldiensten (23, 24, 25) und den gekennzeichneten Füllpaketen und den die Signaltabellen (26, 27, 28) transportierenden Paketen entspricht.
- vor Bildung des optimierten Signalbeitrags (36) Synchronisationsinformationen in Form von Synchronisationsrastern im optimierten Signalbeitrag (36) eingefügt werden, wobei besagter optimierter Signalbeitrag (36) von mindestens einem in den genannten geographischen Regionen (9) vorhandenem Empfänger (11) empfangen wird, wobei die Regionaldienste (23,24,25) aus dem optimierten Signalbeitrag (36) extrahiert und an eine Vielzahl von an den vorerwähnten Empfänger (11) gekoppelten Übertragungsmitteln (12) übertragen werden, wobei die besagten Synchronisationsinformationen die Funktion der Ausführung der Synchronisation zwischen den Übertragungsmitteln (12) erfüllen.

2. Verfahren gemäß Anspruch 1, **dadurch gekennzeichnet, dass** die Füllpakete und die die Signaltabellen (26, 27, 28) transportierenden Pakete durch Ausübung einer Übertragung der Kennung (PID) der Füllpakete und der die Signaltabellen (26, 27, 28) transportierenden Pakete gekennzeichnet werden (31, 32).

3. Verfahren gemäß einem der vorhergehenden Ansprüche, **dadurch gekennzeichnet, dass** die Datenbursts des optimierten Signalbeitrags (36) in der ersten Phase für alle globalen Übertragungsdienste (22) und anschließend in der zweiten Phase alle Regionaldienste (23, 24, 25) gebildet werden.

4. Verfahren gemäß einem der vorhergehenden Ansprüche, **dadurch gekennzeichnet, dass** der optimierte Signalbeitrag (36) die synchronen Datenbursts, deren Periode und Durchfluss identisch sind, umfasst.

5. Verfahren zum Demultiplexieren, **dadurch gekennzeichnet, dass**, für eine gegebene geographische Region (9), aus einem optimierten Signalbeitrag (36), der durch Ausführung der Verfahrensetappen gemäß einem der Ansprüche 1 bis 5 erhalten wird und die Daten zu mindestens einem Multiplex (35) enthält, wobei jedes Multiplex (35) globale (22) und regionale (23, 24 und 25) Übertragungsdienste, Füllpakete und die die Signaltabellen (26, 27, 28) transportierenden Pakete enthält, die gemäß ihren Zugehörigkeits-Multiplexen gekennzeichnet werden, ein Signal erzeugt wird, indem:
- nur die Dienste für die besagte geographische Region (9) beibehalten (41) werden;
- die Datenbursts aus dem im optimierten Signalbeitrag (36) enthaltenen Datenstrom gebildet (42) werden, der Folgendem entspricht:
o den globalen Übertragungsdiensten (22);
o den für die besagte geographische Region (9) bestimmten Regionaldiensten (23, 24, 25);
o den gekennzeichneten Füllpaketen und den die Signaltabellen (26, 27, 28) transportierenden Paketen, die den Regionaldiensten (23, 24, 25) für die besagte geografische Region (9) entsprechen.

6. Verfahren gemäß Anspruch 5, **dadurch gekennzeichnet, dass** während der Etappe (42) zur Bildung der Datenbursts die Kennung (PID) der gekennzeichneten Füllpakete und der die Signaltabellen (26, 27, 28) transportierenden gekennzeichneten Pakete so übertragen wird, dass die Datenströme wiederhergestellt werden, die den für die geographische Region (9) bestimmten Diensten entsprechen.

7. Verfahren gemäß einem der Ansprüche 5 oder 6, **dadurch gekennzeichnet, dass** es eine Etappe (43) zur Nivellierung des während der Etappe der Erstellung (42) des Datenbursts gebildeten Signaldurchflusses (36) umfasst.

8. System zur Übertragung von Regionaldiensten (23, 24, 25) und globalen Übertragungsdiensten (22), wobei besagtes System einen Inkapsulator zur Erzeugung eines optimierten Beitragssignals (36) mit Multiplexen (35) enthält, wobei jedes Multiplex (35) die globalen Übertragungsdienste (22) und eine eigene Kombination von Regionaldiensten (23, 24, 25) enthält und jedes Multiplex (35) Füllpakete und die die Signaltabellen (26, 27, 28) transportierenden Pakete enthält, **dadurch gekennzeichnet, dass** besagtes System für die Übertragung bestimmter regionaler Dienste (23, 24, 25) und die globale Übertragung (22) in Datenbursts geeignet ist, wobei der Signalbeitrag durch Ausführung der Verfahrensetappen gemäß einem der Ansprüche 1 bis 4 erzeugt wird.

9. Übertragungssystem gemäß Anspruch 8, **dadurch gekennzeichnet, dass** besagtes System für die Übertragung der Multiplexe (35) auf ein Sendegebiet (10) mit den geographischen Regionen (9) vorgesehen ist und jede geographische Region (9) zumindest ein Multiplex (35) empfängt, wobei das System die auf verschiedene Regionen (9) verteilten und für den Empfang des vom Sendegebiet (10) übertragenen optimierten Signals bestimmten Empfänger (11) umfasst, wobei jeder Empfänger (11) für die von dem optimierten Beitragssignal (36) ausgehende Erzeugung eines zu sendenden Signals für die geographische Region (9), in der sich der Empfänger (11) befindet, vorgesehen ist, wobei das zu sendende Signal von den Übertragungsmitteln (12) auf die gesamte geographische Region (9), in der sich die Übertragungsmittel (12) befinden, übertragen wird, wobei die Übertragungsmittel (12) ein einziges Frequenznetzwerk bilden und synchronisiert sind, wobei mindestens ein Teil der Empfänger (11) für die Implementierung des Verfahrens zum Demultiplexieren gemäß einer der Ansprüche 5 bis 7 vorgesehen ist.

10. Empfänger (11) mit einer Verarbeitungseinheit (61), einem Eingang (60) und einem Ausgang (62), **dadurch gekennzeichnet, dass** der Eingang (60) für den Empfang eines optimierten Signalbeitrags (36) vorgesehen ist, das durch die Ausführung der Verfahrensetappen gemäß einem der Ansprüche 1 bis 4 erhalten wird und die Daten zu mindestens einem Multiplex (35) enthält, wobei jedes Multiplex (35) die globalen Übertragungsdienste (22) und regionalen Dienste (23, 24 und 25), Füllpakete und die die Signaltabellen (26, 27, 28) enthaltenden Pakete, die gemäß ihrem Zugehörigkeits-Multiplex (35) gekennzeichnet sind, enthält, wobei die Verarbeitungseinheit (61) für den Aufbau eines zum Ausgang (62) gesendeten Signals durch Implementierung des Verfahrens zum Demultiplexieren gemäß einem der Ansprüche 5 bis 7 vorgesehen ist.

## Claims

1. Method for generating an optimised contribution signal (36) comprising multiplexes (35), each multiplex (35) comprising global broadcasting services (22) intended for a coverage area (10) and an own combination of regional services (23, 24, 25) intended for at least one geographic region (9) of said coverage area, each multiplex (35) comprising stuffing packets and packets transporting signalling tables (26, 27, 28) **characterised in that** the optimised contribution signal (36) is generated by an encapsulator (4) by:
- retaining (30) only the global broadcasting services (22) which are different from one another;
- marking (31 ,32) the stuffing packets and the packets transporting the signalling tables (26, 27, 28) according to the multiplex (35) to which they belong;
- constructing (33) data bursts from the data streams corresponding to the global broadcasting services (22), to the regional services (23, 24, 25), and to the marked stuffing packets and to the marked packets transporting the signalling tables (26, 27, 28),
- inserting, before the construction of the optimised contribution signal (36), synchronisation information in the form of synchronisation frames into the optimised contribution signal (36), said optimised contribution signal (36) being received by at least one receiver (11) present in one of said geographic regions (9), said regional service (23,24,25) being extracted from said optimised contribution signal (36) and transmitted to a plurality of transmission means (12) coupled to said receiver (11), the function of said synchronisation information being to accomplish the synchronisation between said transmission means (12).

2. Method according to claim 1 **characterised in that** the stuffing packets and the packets transporting the signalling tables (26, 27, 28) are marked (31, 32) by applying a translation of the identifier (Pid) of said stuffing packets and of the packets transporting the signalling tables (26, 27, 28).

3. Method according to any one of the preceding claims **characterised in that** the data bursts of the optimised contribution signal (36) are constructed (33) firstly for all the global broadcasting services (22) then secondly for all the regional services (23, 24, 25).

4. Method according to any one of the preceding claims **characterised in that** the optimised contribution signal (36) comprises synchronous data bursts with identical period and bit rate.

5. Demultiplexing method **characterised in that**, for a given geographic region (9), from an optimised contribution signal (36) obtained by executing the steps of the method according to any one of claims 1 to 5 and comprising data relating to at least one multiplex (35), each multiplex (35) comprising global broadcasting services (22) and regional broadcasting services (23, 24 and 25), stuffing packets and packets transporting signalling tables (26,27,28) marked according to the multiplex to which they belong, a signal is constructed by:
- retaining (41) only the services intended for said geographic region (9);
- constructing (42) data bursts from the data streams comprised in the optimised contribution signal (36) corresponding:
o to the global broadcasting services (22);
o to the regional services (23, 24, 25) intended for said geographic region (9);
o to the marked stuffing packets and to the marked packets transporting the signalling tables (26, 27, 28) corresponding to the regional services (23, 24, 25) intended for said geographic region (9).

6. Method according to claim 5 **characterised in that** during the data burst construction step (42), the identifier (Pid) of the marked stuffing packets and the marked packets transporting the signalling tables (26, 27, 28) is translated so as to reconstruct the data streams corresponding to the services intended for the geographic region (9).

7. Method according to one of claims 5 or 6 **characterised in that** it comprises a step (43) for smoothing the bit rate of the signal (36) constructed in the data burst construction step (42).

8. System for broadcasting regional services (23, 24, 25) and global broadcasting services (22), said system comprising an encapsulator intended to generate an optimised contribution signal (36) comprising multiplexes (35), each multiplex (35) comprising the global broadcasting services (22) and an own combination of regional services (23, 24, 25) and each multiplex (35) comprising stuffing packets and packets transporting signalling tables (26, 27, 28), **characterised in that** said system is able to broadcast certain regional services (23, 24, 25) and global broadcasting services (22) in data bursts, the contribution signal being generated by executing the steps of the method according to any one of claims 1 to 4.

9. Broadcasting system according to claim 8, **characterised in that** said system being designed to broadcast the multiplexes (35) over a coverage area (10) comprising geographic regions (9) and each geographic region (9) receiving at least one multiplex (35), said system comprises receivers (11) distributed over various geographic regions (9) and intended to receive said optimised signal transmitted in the coverage area (10), each receiver (11) being intended to generate from the optimised contribution signal (36) a signal to be transmitted intended for the geographic region (9) in which said receiver (11) is located, the signal to be transmitted being transmitted by transmission means (12) to the whole geographic region (9) in which the transmission means (12) are located, the transmission means (12) forming a single-frequency network and being synchronised, at least some of said receivers (11) being intended to implement the demultiplexing method in accordance with any one of claims 5 to 7.

10. Receiver (11) comprising a processing unit (61), an input (60) and an output (62), **characterised in that** the input (60) being designed to receive an optimised contribution signal (36) obtained by executing the steps of the method according to any one of claims 1 to 4 and comprising data relating to at least one multiplex (35), each multiplex (35) comprising global broadcasting services (22) and regional services (23, 24 and 25), stuffing packets and packets transporting signalling tables (26, 27, 28) marked according to the multiplex (35) to which they belong, the processing unit (61) is intended to construct a signal sent to the output (62) obtained by implementing the demultiplexing method in accordance with any one of claims 5 to 7.
